# EUROPÄISCHE PATENTSCHRIFT

(11) **EP 3 870 448 B1**
(45) Veröffentlichungstag und Bekanntmachung des Hinweises auf die Patenterteilung: **17.08.2022**
(21) Anmeldenummer: 19821053.6
(22) Anmeldetag: 06.12.2019
(51) Int. Cl.: B22F 10/20, B33Y 70/00, C22C 1/04, B22F 3/105, C22C 19/05, C22C 32/00, B22F 10/25, B22F 10/28

(54) **NICKELBASISLEGIERUNG FÜR ADDITIVE FERTIGUNG UND ADDITIVES FERTIGUNGSVERFAHREN**
NICKEL-BASED ALLOY FOR ADDITIVE MANUFACTURING AND ADDITIVE MANUFACTURING METHOD
ALLIAGE À BASE DE NICKEL POUR LA FABRICATION ADDITIVE ET PROCÉDÉ DE FABRICATION ADDITIVE

(30) Priorität: 27.12.2018 DE 102018251722
(43) Veröffentlichungstag der Anmeldung: 01.09.2021
(73) Patentinhaber: Siemens Energy Global GmbH & Co. KG, 81739 München (DE)
(72) Erfinder: HEINZE, Christoph, 10317 Berlin (DE); KÜSTERS, Yves, 10829 Berlin (DE)
(86) Internationale Anmeldenummer: PCT/EP2019/083955
(87) Internationale Veröffentlichungsnummer: WO 2020/135995

(56) Entgegenhaltungen:
- EP-A1- 3 205 442
- EP-A1- 3 257 956
- US-A1- 2008 101 981

## Beschreibung

Die Erfindung betrifft eine Legierung auf Nickelbasis, die bei der additiven Fertigung mittels selektiver Energiebestrahlung wie Laserstrahlung, Elektronenstrahlung oder auch Pulverauftragsschweißen verwendet werden kann.

Die additive Fertigung, wie z.B. das selektive Laserstrahlschmelzen (SLM), aber nicht beschränkt auf das genannte Verfahren, basiert auf der lagenweisen, selektiven Aufschmelzung von Pulverschichten als Ausgangsmaterial zur Erzeugung eines geometrischen Objektes.

Beim SLM von hochtemperaturbeständigen Legierungen treten während des Prozesses Mikrorisse und während der Wärmebehandlung Makrorisse auf.

Nickelbasiswerkstoffe lassen sich in einer Schichtdicke bis zu 40µm rissfrei und produktiv aufbauen, allerdings weisen sie für eine einige Anwendungen keine ausreichenden mechanischen Eigenschaften auf, wie insbesondere Kriechfestigkeit. Im Weiteren ist die Oxidationsbeständigkeit oft eingeschränkt.

Für eine Exploration und Industrialisierung weiterer additiv gefertigter Heißgas-Komponenten ist allerdings eine Legierung mit geeigneter Kombination aus mechanischen Eigenschaften und Produktivität notwendig.

Die US 2008101981 A1 offenbart eine Nickelbasislegierung mit Kohlenstoff, Chrom, Kobalt, Wolfram, Titan, Aluminium, Bor, Zirkon, Tantal, Niob sowie Palladium.

Die EP 3 205 442 A1 offenbart eine Nickelbasislegierung mit Kohlenstoff, Chrom, Kobalt, Wolfram, Titan, Aluminium, Bor, Zirkonium, Tantal, Niob.

Die EP 3 257 956 A1 offenbart ebenfalls eine Nickelbasislegierung mit Kohlenstoff, Chrom, Kobalt, Wolfram, Titan, Aluminium, Bor, Tantal sowie Niob, Molybdän.

Bisher wurde das Problem durch die Verwendung von anderen Legierungen gelöst, wobei dies eine Einschränkung bezüglich Bauqualität und Produktivität (20µm Schichtdicke) zur Folge hat. Insbesondere treten bei den entsprechenden Legierungen Mikrosrissbildung (im SLM-Prozess) und Makrorissbildung während der Wärmebehandlung auf, so dass ein Einsatz des SLM-Verfahrens mit diesen alternativen Legierungen die Nutzung als Fertigungsprozess für Neuteile einschränkt und die Möglichkeiten des SLM-Verfahrens nicht zum Tragen kommen können. Die Aufgabe der Erfindung ist daher oben genanntes Problem zu lösen.

Die Aufgabe wird gelöst durch eine Legierung gemäß Anspruch 1 und einem Verfahren gemäß Anspruch 2.

In den Unteransprüchen sind weitere vorteilhafte Maßnahmen aufgelistet, die beliebig miteinander kombiniert werden können, um weitere Vorteile zu erzielen.

Die Erfindung betrifft eine Nickelbasissuperlegierung, bestehend aus, in Gew.-%:

| | |
|---|---|
| Kohlenstoff (C) | 0,13% - 0,17% |
| Chrom (Cr) | 21% - 22% |
| Kobalt (Co) | 18% - 20% |
| Wolfram (W) | 1,8% - 2,2% |
| Titan (Ti) | 3,0% - 3,4% |
| Aluminium (Al) | 2,1% - 3,0% |
| Bor (B) | 0,008% - 0,012% |
| Zirkon (Zr) | 0,0025% - 0,01% |
| Tantal (Ta) | 1,6% - 2,5% |
| Niob (Nb) | 1,2% - 1,6% |

optional:

| | |
|---|---|
| Yttrium (Y) | 0,0025% - 0,0075% |
| Yttriumoxid (Y₂O₃) | 0,25% - 1,25% |

optional und insbesondere maximal:

| | |
|---|---|
| Vanadium (V) | 0,01% |
| Hafnium (Hf) | 0,01% |
| Silber (Ag) | 0,005% |
| Blei (Pb) | 0,0003% |
| Selen (Se) | 0,0003% |
| Sauerstoff (O) | 0,005% |
| Gallium (Ga) | 0,001% |
| Bismut (Bi) | 0,0001% |
| Stickstoff (N) | 0,005% |
| Mangan (Mg) | 0,007% |
| Tellur (Te) | 0,00005% |
| Thallium (Tl) | 0,0005% |
| Kalzium (Ca) | 0,0001% |
| Kalium (K) | 0,0001% |
| Silizium (Si) | 0,02% |
| Mangan (Mn) | 0,01% |
| Eisen (Fe) | 0,02% |
| Kupfer (Cu) | 0,01% |
| Phosphor (P) | 0,005% |
| Schwefel (S) | 0,001% |
| Molybdän (Mo) | 0,1% |
| andere Verunreinigungen | 0,1% |
| Nickel (Ni) | Rest. |

Durch den verringerten Anteil von Silizium (Si) und Mangan (Mn) wird das Rissverhalten deutlich verbessert.

Durch den geringen Gehalt an Schwefel (S) wird der Oxidations- und Korrosionswiderstand erhöht.

Durch den Chromgehalt (Cr) wird der Anteil der Sigma-Phase mit höherem γ'-Anteil kompensiert.

Ebenfalls wird der Titangehalt (Ti) so ausgewählt, um einen γ'-Gehalt mit höherem Anteil von Tantal (Ta) und Aluminium (Al) zu kompensieren.

Der Gehalt an Aluminium (Al) verbessert die Kriecheigenschaften und den Oxidationswiderstand.

Durch die Gehalte an Zirkon (Zr), Eisen (Fe), Kupfer (Cu) wird die Rissfähigkeit deutlich verringert.

Durch die Zugabe von Tantal (Ta) werden die Kriecheigenschaften deutlich verbessert, wobei der Niob-Gehalt (Nb) die Festigkeit erhöht.

Durch die Zugabe von Yttriumoxid (Y₂O₃) wird der Oxidationswiderstand verbessert.

Mit den gezeigten Anpassungen wird die Verarbeitbarkeit für einen produktiven SLM-Prozess mit verbesserten mechanischen Eigenschaften und gesteigerter Oxidationsbeständigkeit gewährleistet. In der Wärmebehandlung ist keine Rissbildung aufgrund Alterungserscheinungen zu erwarten, diese wurde experimentell und simulativ bestätigt, was die Nachbearbeitungsaufwendungen, wie Oberflächenbehandlung, reduziert.

Als Verfahren wird vorzugsweise selektives Pulverschmelzen oder selektives Pulversintern oder Auftragsschweißen, Pulverauftragsschweißen verwendet, sowie selektives Lasersintern oder ein selektives Laserschmelzen.

Der Chromgehalt (Cr) beträgt vorzugsweise 21,0% bis 21,5%, insbesondere 21,0% bis 21,3%, ganz insbesondere 21,0 Gew.-%.

Der Kobaltgehalt (Co) beträgt vorzugsweise 19 Gew.-%.

Der Gehalt an Titan (Ti) beträgt vorzugsweise 3,0 Gew.-% bis 3,2 Gew.-%, insbesondere 3,0 Gew.-% bis 3,1 Gew.-%, ganz insbesondere 3,0 Gew.-%.

Der Gehalt an Aluminium (Al) beträgt vorzugsweise 2,2 Gew.-% bis 2,4 Gew.-%, insbesondere 2,3 Gew.-% bis 2,4 Gew.-%, ganz insbesondere 2,4 Gew.-%.

Der Gehalt an Tantal (Ta) beträgt vorzugsweise 1,7 Gew.-% bis 1,9 Gew.-%, insbesondere 1,8 Gew.-% bis 1,9 Gew.-%, ganz insbesondere 1,9 Gew.-%.

Der Gehalt an Niob (Nb) beträgt vorzugsweise 1,4 Gew.-% bis 1,6 Gew.-%, insbesondere 1,5 Gew.-% bis 1,6 Gew.-%, ganz insbesondere 1,6 Gew.-%.

Der Kohlenstoffgehalt (C) beträgt vorzugsweise 0,15 Gew.-%.

Der Wolframgehalt (W) beträgt vorzugsweise 2,0 Gew.-%.

Der Gehalt an Aluminium (Al) beträgt vorzugsweise 2,4 Gew.-% bis 3,0 Gew.-%, insbesondere 2,6 Gew.-% bis 3,0 Gew.-%, ganz insbesondere 3,0 Gew.-%.

Vorteile werden auch erzielt mit einem vorzugsweisen Gehalt an Tantal (Ta) 1,9 Gew.-% bis 2,5 Gew.-%, insbesondere 2,2 Gew.-% bis 2,5 Gew.-%, ganz insbesondere 2,5 Gew.-%.

## Patentansprüche

1. Nickelbasissuperlegierung, bestehend aus, in Gew.-%:
| | |
|---|---|
| Kohlenstoff (C) | 0,13% - 0,17% |
| Chrom (Cr) | 21% - 22% |
| Kobalt (Co) | 18% - 20% |
| Wolfram (W) | 1,8% - 2,2% |
| Titan (Ti) | 3,0% - 3,4% |
| Aluminium (Al) | 2,1% - 3,0% |
| Bor (B) | 0,008% - 0,012% |
| Zirkon (Zr) | 0,0025% - 0,01% |
| Tantal (Ta) | 1,6% - 2,5% |
| Niob (Nb) | 1,2% - 1,6% |
optional:
| | |
|---|---|
| Yttrium (Y) | 0,0025% - 0,0075% |
| Yttriumoxid (Y₂O₃) | 0,25% - 1,25% |
optional und insbesondere maximal:
| | |
|---|---|
| Vanadium (V) | 0,01% |
| Hafnium (Hf) | 0,01% |
| Silber (Ag) | 0,005% |
| Blei (Pb) | 0,0003% |
| Selen (Se) | 0,0003% |
| Sauerstoff (O) | 0,005% |
| Gallium (Ga) | 0,001% |
| Bismut (Bi) | 0,0001% |
| Stickstoff (N) | 0,005% |
| Mangan (Mg) | 0,007% |
| Tellur (Te) | 0,00005% |
| Thallium (Tl) | 0,0005% |
| Kalzium (Ca) | 0,0001% |
| Kalium (K) | 0,0001% |
| Silizium (Si) | 0,02% |
| Mangan (Mn) | 0,01% |
| Eisen (Fe) | 0,02% |
| Kupfer (Cu) | 0,01% |
| Phosphor (P) | 0,005% |
| Schwefel (S) | 0,001% |
| Molybdän (Mo) | 0,1% |
| andere Verunreinigungen | 0,1% |
| Nickel (Ni) | Rest. |

2. Verfahren zur Herstellung eines Bauteils aus einer Legierung gemäß Anspruch 1,
bei dem ein additives Fertigungsverfahren gewählt wird, insbesondere selektives Pulverschmelzen oder selektives Pulversintern oder
Auftragsschweißen,
insbesondere Pulverauftragsschweißen

3. Verfahren nach Anspruch 2,
bei dem ein selektives Lasersintern oder ein selektives Laserschmelzen verwendet wird.

4. Legierung oder Verfahren nach einem oder beiden der Ansprüche 1, 2 oder 3,
bei dem der Chromgehalt (Cr) 21,0% bis 21,5%; insbesondere 21,0% bis 21,3%,
ganz insbesondere 21,0 Gew.-%
beträgt.

5. Legierung oder Verfahren nach einem oder mehreren der Ansprüche 1, 2, 3 oder 4,
bei dem der Kobaltgehalt (Co) 19 Gew.-% beträgt.

6. Legierung oder Verfahren nach einem oder mehreren der Ansprüche 1, 2, 3, 4 oder 5,
bei dem der Gehalt an Titan (Ti) 3,0 Gew.-% bis 3,2 Gew.-%, insbesondere 3,0 Gew.-% bis 3,1 Gew.-%,
ganz insbesondere 3,0 Gew.-%
beträgt.

7. Legierung oder Verfahren nach einem oder mehreren der Ansprüche 1, 2, 3, 4, 5 oder 6,
bei dem der Gehalt an Aluminium (Al) 2,2 Gew.-% bis 2,4 Gew.-%,
insbesondere 2,3 Gew.-% bis 2,4 Gew.-%,
ganz insbesondere 2,4 Gew.-%
beträgt.

8. Legierung oder Verfahren nach einem oder mehreren der Ansprüche 1, 2, 3, 4, 5, 6 oder 7,
bei dem der Gehalt an Tantal (Ta) 1,7 Gew.-% bis 1,9 Gew.-%,
insbesondere 1,8 Gew.-% bis 1,9 Gew.-%,
ganz insbesondere 1,9 Gew.-%
beträgt.

9. Legierung oder Verfahren nach einem oder mehreren der vorhergehenden Ansprüche,
bei dem der Gehalt an Niob (Nb) 1,4 Gew.-% bis 1,6 Gew.-%, insbesondere 1,5 Gew.-% bis 1,6 Gew.-%,
ganz insbesondere 1,6 Gew.-%
beträgt.

10. Legierung oder Verfahren nach einem oder mehreren der vorhergehenden Ansprüche,
bei dem der Kohlenstoffgehalt (C) 0,15 Gew.-% beträgt.

11. Legierung oder Verfahren nach einem oder mehreren der vorhergehenden Ansprüche,
bei dem der Wolframgehalt (W) 2,0 Gew.-% beträgt.

12. Legierung oder Verfahren nach einem oder mehreren der vorherigen Ansprüche,
bei dem der Gehalt an Aluminium (Al) 2,4 Gew.-% bis 3,0 Gew.-%,
insbesondere 2,6 Gew.-% bis 3,0 Gew.-%,
ganz insbesondere 3,0 Gew.-%
beträgt.

13. Legierung oder Verfahren nach einem oder mehreren der vorherigen Ansprüche,
bei dem der Gehalt an Tantal (Ta) 1,9 Gew.-% bis 2,5 Gew.-%,
insbesondere 2,2 Gew.-% bis 2,5 Gew.-%,
ganz insbesondere 2,5 Gew.-%
beträgt.

## Claims

1. Nickel-base superalloy consisting of, in % by weight:
| | |
|---|---|
| carbon (C) | 0.13%-0.17% |
| chromium (Cr) | 21%-22% |
| cobalt (Co) | 18%-20% |
| tungsten (W) | 1.8%-2.2% |
| titanium (Ti) | 3.0%-3.4% |
| aluminum (Al) | 2.1%-3.0% |
| boron (B) | 0.008%-0.012% |
| zirconium (Zr) | 0.0025%-0.01% |
| tantalum (Ta) | 1.6%-2.5% |
| niobium (Nb) | 1.2%-1.6% |
optionally:
| | |
|---|---|
| yttrium (Y) | 0.0025%-0.0075% |
| yttrium oxide (Y₂O₃) | 0.25%-1.25% |
optionally and especially not more than:
| | |
|---|---|
| vanadium (V) | 0.01% |
| hafnium (Hf) | 0.01% |
| silver (Ag) | 0.005% |
| lead (Pb) | 0.0003% |
| selenium (Se) | 0.0003% |
| oxygen (O) | 0.005% |
| gallium (Ga) | 0.001% |
| bismuth (Bi) | 0.0001% |
| nitrogen (N) | 0.005% |
| manganese (Mn) | 0.007% |
| tellurium (Te) | 0.00005% |
| thallium (Tl) | 0.0005% |
| calcium (Ca) | 0.0001% |
| potassium (K) | 0.0001% |
| silicon (Si) | 0.02% |
| manganese (Mn) | 0.01% |
| iron (Fe) | 0.02% |
| copper (Cu) | 0.01% |
| phosphorus (P) | 0.005% |
| sulfur (S) | 0.001% |
| molybdenum (Mo) | 0.1% |
| other impurities | 0.1% |
| nickel (Ni) | balance. |

2. Method of producing a component from an alloy according to Claim 1,
in which an additive manufacturing method is chosen, especially selective powder melting or selective powder sintering or application welding,
especially powder application welding.

3. Method according to Claim 2,
in which selective laser sintering or selective laser melting is used.

4. Alloy or method according to one or both of Claims 1, 2 and 3,
in which the chromium content (Cr) is 21.0% to 21.5%; especially 21.0% to 21.3%,
very particularly 21.0% by weight.

5. Alloy or method according to one or more of Claims 1, 2, 3 and 4,
in which the cobalt content (Co) is 19% by weight.

6. Alloy or method according to one or more of Claims 1, 2, 3, 4 and 5,
in which the content of titanium (Ti) is 3.0% by weight to 3.2% by weight,
especially 3.0% by weight to 3.1% by weight,
very particularly 3.0% by weight.

7. Alloy or method according to one or more of Claims 1, 2, 3, 4, 5 and 6,
in which the content of aluminum (Al) is 2.2% by weight to 2.4% by weight,
especially 2.3% by weight to 2.4% by weight,
very particularly 2.4% by weight.

8. Alloy or method according to one or more of Claims 1, 2, 3, 4, 5, 6 and 7,
in which the content of tantalum (Ta) is 1.7% by weight to 1.9% by weight,
especially 1.8% by weight to 1.9% by weight,
very particularly 1.9% by weight.

9. Alloy or method according to one or more of the preceding claims,
in which the content of niobium (Nb) is 1.4% by weight to 1.6% by weight,
especially 1.5% by weight to 1.6% by weight,
very particularly 1.6% by weight.

10. Alloy or method according to one or more of the preceding claims,
in which the carbon content (C) is 0.15% by weight.

11. Alloy or method according to one or more of the preceding claims,
in which the tungsten content (W) is 2.0% by weight.

12. Alloy or method according to one or more of the preceding claims,
in which the content of aluminum (Al) is 2.4% by weight to 3.0% by weight,
especially 2.6% by weight to 3.0% by weight,
very particularly 3.0% by weight.

13. Alloy or method according to one or more of the preceding claims,
in which the content of tantalum (Ta) is 1.9% by weight to 2.5% by weight,
especially 2.2% by weight to 2.5% by weight,
very particularly 2.5% by weight.

## Revendications

1. Super alliage à base de nickel,
constitué, en pourcentage en poids :
| | |
|---|---|
| de carbone (C) | de 0,13% à 0,17% |
| de chrome (Cr) | de 21% à 22% |
| de cobalt (Co) | de 18% à 20% |
| de tungstène (W) | de 1,8% à 2,2% |
| de titane (Ti) | de 3,0% à 3,4% |
| d'aluminium (Al) | de 2,1% à 3,0% |
| de bore (B) | de 0,008% à 0,012% |
| de zirconium (Zr) | de 0,0025% à 0,01% |
| de tantale (Ta) | de 1,6% à 2,5% |
| de niobium (Nb) | de 1,2% à 1,6% |
éventuellement :
| | |
|---|---|
| d'yttrium (Y) | de 0,0025% à 0,0075% |
| d'oxyde d'yttrium (Y₂O₃) | de 0,25% à 1,25% |
éventuellement et notamment au maximum :
| | |
|---|---|
| de vanadium (V) | 0,01% |
| d'hafnium (Hf) | 0,01% |
| d'argent (Ag) | 0,005% |
| de plomb (Pb) | 0,0003% |
| de sélénium (Se) | 0,0003% |
| d'oxygène (O) | 0,005% |
| de gallium (Ga) | 0,001% |
| de bismuth (Bi) | 0,0001% |
| d'azote (N) | 0,005% |
| de magnésium (Mg) | 0,007% |
| de tellure (Te) | 0,00005% |
| de thallium (Tl) | 0,0005% |
| de calcium (Ca) | 0,0001% |
| de potassium (K) | 0,0001% |
| de silicium (Si) | 0,02% |
| de manganèse (Mn) | 0,01% |
| de fer (Fe) | 0,02% |
| de cuivre (Cu) | 0,01% |
| de phosphore (P) | 0,005% |
| de soufre (S) | 0,001% |
| de molybdène (Mo) | 0,1% |
| d'autres impuretés | 0,1% |
| de nickel (Ni) | le reste |

2. Procédé de fabrication d'une pièce en un alliage suivant la revendication 1,
dans lequel on choisit un procédé de fabrication additive, notamment une fusion de poudre sélective ou un frittage de poudre sélectif ou
un soudage avec apport, notamment un soudage avec apport de poudre.

3. Procédé suivant la revendication 2,
dans lequel on utilise un frittage laser sélectif ou une fusion laser sélective.

4. Alliage ou procédé suivant l'une ou deux des revendications 1, 2 ou 3,
dans lequel la teneur en chrome (Cr) va de 21,0% à 21,5%, notamment de 21,0% à 21,3%,
en étant d'une manière tout à fait particulière de 21,0% en poids.

5. Alliage ou procédé suivant l'une ou plusieurs des revendications 1, 2, 3 ou 4,
dans lequel la teneur en cobalt (Co) est de 19% en poids.

6. Alliage ou procédé suivant l'une ou plusieurs des revendications 1, 2, 3, 4 ou 5,
dans lequel la teneur en titane (Ti) va de 3,0% en poids à 3,2% en poids,
notamment de 3,0% en poids à 3,1% en poids,
en étant d'une manière tout à fait particulière de 3,0% en poids.

7. Alliage ou procédé suivant l'une ou plusieurs des revendications 1, 2, 3, 4, 5 ou 6,
dans lequel la teneur en aluminium (Al) va de 2,2% en poids à 2,4% en poids,
notamment de 2,3% en poids à 2,4% en poids,
en étant d'une manière tout à fait particulière de 2,4% en poids.

8. Alliage ou procédé suivant l'une ou plusieurs des revendications 1, 2, 3, 4, 5, 6 ou 7,
dans lequel la teneur en tantale (Ta) va de 1,7% en poids à 1,9% en poids,
notamment de 1,8% à 1,9% en poids,
en étant d'une manière tout à fait particulière de 1,9% en poids.

9. Alliage ou procédé suivant l'une ou plusieurs des revendications précédentes,
dans lequel la teneur niobium (Nb) va de 1,4% en poids à 1,6% en poids,
notamment de 1,5% en poids à 1,6% en poids,
en étant d'une manière tout à fait particulière de 1,6% en poids.

10. Alliage ou procédé suivant l'une ou plusieurs des revendications précédentes,
dans lequel la teneur en carbone (C) est de 0,15% en poids.

11. Alliage ou procédé suivant l'une ou plusieurs des revendications précédentes,
dans lequel la teneur en tungstène (W) est de 2,0% en poids.

12. Alliage ou procédé suivant l'une ou plusieurs des revendications précédentes,
dans lequel la teneur en aluminium (Al) va de 2,4% en poids à 3,0% en poids,
notamment de 2,6% en poids à 3,0% en poids,
en étant d'une manière tout à fait particulière de 3,0% en poids.

13. Alliage ou procédé suivant l'une ou plusieurs des revendications précédentes,
dans lequel la teneur en tantale (Ta) va de 1,9% en poids à 2,5% en poids,
notamment de 2,2% en poids à 2,5% en poids,
en étant d'une manière tout à fait particulière de 2,5% en poids.
